# EUROPEAN PATENT APPLICATION

(11) **EP 3 223 153 A1**
(43) Date of publication of application: **27.09.2017**
(21) Application number: 16162838.3
(22) Date of filing: 30.03.2016
(51) Int. Cl.: G06F 9/445, G06F 9/44

(54) **METHOD OF UPDATING PROGRAM CODE AND ELECTRONIC DEVICE USING THE SAME**

(30) Priority: 22.03.2016 US 201615077900
(71) Applicant: M2Communication Inc., Taipei City 104 (TW)
(72) Inventor: PETITGRAND, FABIEN, 302 Hsinchu County (TW); Lin, Yu-Jen, 302 Hsinchu County (TW)
(74) Representative: Becker Kurig Straus

(57) **Abstract**

A method of updating a program code of an electronic device is disclosed. An existing firmware or software is originally stored in a first memory of the electronic device. The electronic device gradually generates a plurality of parts of an updated version of the existing firmware according to a patch file and the existing firmware, and gradually updates the firmware or software of the electronic device in a piece-by-piece fashion. A memory size of the electronic device is reduced.

## Description

### Field of the Invention

The present invention relates to a method of updating a program code and an electronic device using the same, and more particularly, to a method and an electronic device capable of updating the program code with small memory size.

### Summary of the Invention

### Background of the Invention

Machine-to-machine (M2M) communication often refers to wireless communication between electronic devices. Recently, M2M communication has a great influence in the fields of fleet management, remote monitoring of machines and facilities, smart metering for automatically measuring the working time of construction equipment and the consumption of heat or electricity in the point of sales (POS) market and security-related applications. Thousands of electronic devices, e.g. electronic shelf labels (ESLs), may be deployed in a store, a factory, a library, etc. The electronic device utilized in an M2M communication system, which performs wireless transmission with a low data rate, is demanded to consume extremely low power. The electronic device in the M2M communication system may also have a stringent constraint in memory size.

However, updating firmware or software of the electronic device usually happens after the electronic device is deployed. Take updating firmware for example, traditionally, updating a firmware of the electronic device requires twice the amount of non-volatile memory for storing the new program code of the firmware before updating. In detail, an existing firmware is already stored in a memory of the electronic device when the electronic device is deployed. The existing firmware occupies a certain size (e.g., 64kB) of the memory. In order to update the firmware, the electronic device may receive a patch file via wireless communication. After receiving the patch file, the electronic device generates a new firmware according to the existing firmware and the patch file. After the new firmware is generated, the electronic device may either swap to the new firmware or overwrite the new firmware on top of the existing firmware. Note that, the new firmware usually has similar size (i.e., 64kB) with the existing firmware, and the new firmware has to be stored in the memory as well. That is, the memory of the electronic device may have to reserve the certain size (i.e., another 64kB) for storing the new firmware before the electronic device swaps to the new firmware or overwrites the new firmware on the existing firmware, which increases a cost of the electronic device and is not suitable for the electronic device for M2M communication. Therefore, it is necessary to improve the prior art.

### Summary of the Invention

It is therefore a primary objective of the present invention to provide a method of updating a program code and an electronic device capable of updating the program code with small memory size, to improve over disadvantages of the prior art.

This is achieved by a method of updating a program code and an electronic device according to the independent claims 1 and 10 respectively here below. The dependent claims pertain to corresponding further developments and improvements.

As will be seen more clearly from the detailed description following below, a claimed method (20) of updating a program code of an electronic device (10) is disclosed herein. Afirst program code is originally stored in a first memory (102) of the electronic device (10). The method comprises obtaining a patch file (202); sequentially and individually generating a plurality of parts of a second program code according to the first program code and the patch file; and sequentially and individually overwriting the plurality of parts of the second program code on the first program code in the first memory.

In another aspect of the invention, a claimed electronic device (10) is disclosed in the detailed description here below. The electronic device (10) comprises a first memory(102), storing a first program code; a wireless module (106), configured to obtain a patch file, and store the patch file in the first memory (102); and a control unit (100), configured to sequentially and individually generate a plurality of parts of a second program code according to the first program code and the patch file, and sequentially and individually overwrite the plurality of parts of the second program code on the first program code in the first memory (102).

### Brief Description of the Drawings

FIG. 1 is a schematic diagram of an electronic device according to an embodiment of the present invention.
FIG. 2 is a schematic diagram of an updating process according to an embodiment of the present invention.
FIG. 3 is a schematic diagram of an updating process according to an embodiment of the present invention.

### Detailed Description

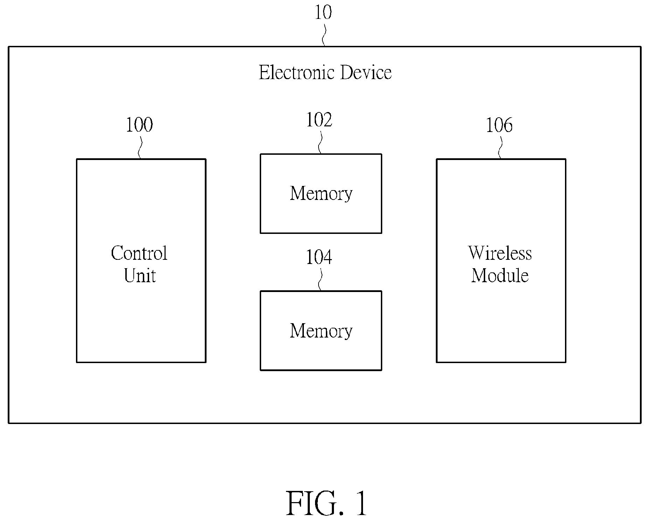

Please refer to FIG. 1, which is a schematic diagram of an electronic device 10 according to an embodiment of the present invention. The electronic device 10 may be an electronic shelf label (ESL) deployed in a store. The electronic device 10 comprises a memory 102, a memory 104, a wireless module 106 and a control unit 100. The memory 102 is a nonvolatile memory, such as an electrically erasable programmable read only memory (EEPROM) or a flash memory. A first program code PC_1 is originally stored in the memory 102. The first program code PC_1 represents an existing firmware or software which is intended to be updated. The memory 104 is a volatile memory, such as a random access memory (RAM). The wireless module 106 is configured to receive a patch file PF via a wireless link. After the patch file PF is received, the patch file PF is also stored in the memory 102.

The control unit 100 is configured to generate a second program code PC_2, which is an updated version of the first program code PC_1, according to the first program code PC_1 and the patch file PF. More particularly, the control unit 100 generates a plurality of parts BK_1-BK_N of the second program code PC_2 sequentially and individually, and overwrites the plurality of parts BK_1-BK_N of the second program code PC_2 sequentially and individually on top of the first program code PC_1 in the memory 102. In detail, the control unit 100 firstly generates the part BK_1 of the second program code PC_2 and stores the part BK_1 in the memory 104 temporarily. After the part BK_1 is overwritten into the memory 102, the control unit 100 consecutively generates the part BK_2 of the second program code PC_2, stores the part BK_2 in the memory 104, and overwrites the part BK_1 on top of the first program code PC_1 in the memory 102. The control unit 100 continues performing the above procedures until the last part BK_N of the second program code PC_2 is generated and overwritten on top of the first program code PC_1 in the memory 102.

In other words, after a part BK_k of the second program code PC_2 is generated and temporarily stored into the memory 104, a previous part BK_k-1 of the second program code PC_2 is read from temporary memory 104 and overwritten into the memory 102. That is, the control unit 100 generates the second program code PC_2 and overwrites the second program code PC_2 into the memory 102 in a piece-by-piece fashion, with only 2 parts simultaneously stored in temporary memory 104. Specifically, the control unit 100 generates a part/piece of the second program code PC_2 at a time, and utilizes the volatile memory 104 to buffer the newly generated part of the second program code PC_2 before overwriting the newly generated part of the second program code PC_2 into the nonvolatile memory 102. Compared to the prior art, the control unit 100 does not generate the entire second program code PC_2 at one time. Therefore, there is no need for double memory size to store both the first program code PC_1 and the second program code PC_2.

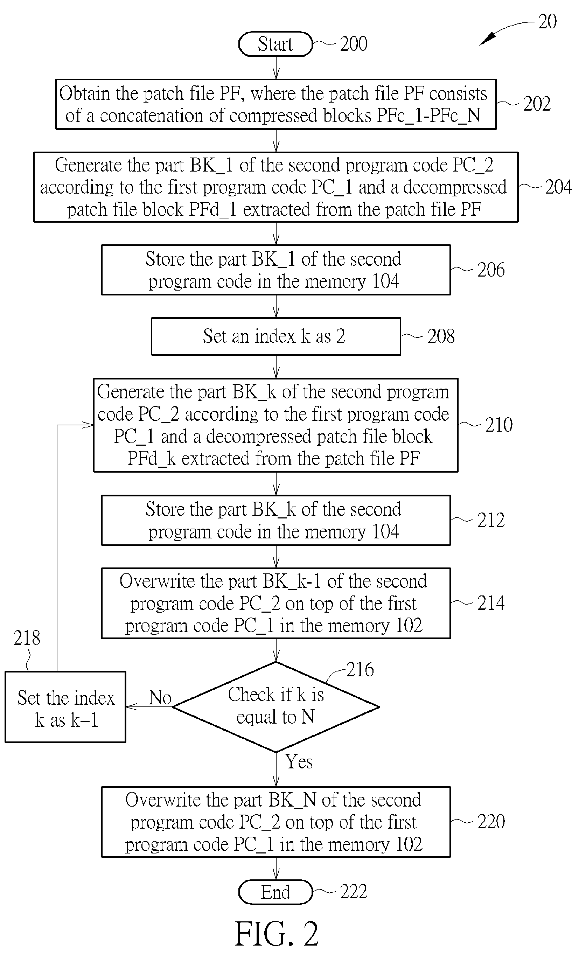

Operations of the electronic device 10 updating the first program code PC_1 may be summarized into an updating process 20. Note that, before the updating process 20 starts, the first program code PC_1 is originally stored in the memory 102. Please refer to FIG. 2, which is a schematic diagram of the updating process 20 according to an embodiment of the present invention. The updating process 20 is executed by the electronic device 10, and comprises following steps:
- Step 200:: Start.
- Step 202:: Obtain the patch file PF.
- Step 204:: Generate the part BK_1 of the second program code PC_2 according to the first program code PC_1 and the patch file PF.
- Step 206:: Store the part BK_1 of the second program code in the memory 104.
- Step 208:: Set an index k as 2.
- Step 210:: Generate the part BK_k of the second program code PC_2 according to the first program code PC_1 and the patch file PF.
- Step 212:: Store the part BK_k of the second program code in the memory 104.
- Step 214:: Overwrite the part BK_k-1 of the second program code PC_2 on top of the first program code PC_1 in the memory 102.
- Step 216:: Check if k is equal to N. If yes, go to Step 220; otherwise, go to Step 218.
- Step 218:: Set the index k as k+1, and go to Step 210.
- Step 220:: Overwrite the part BK_N of the second program code PC_2 on top of the first program code PC_1 in the memory 102.
- Step 222:: End.

According to the updating process 20, the plurality of parts BK_1- BK_N of the second program code PC_2 may be sequentially and individually generated and overwritten into the memory 102. Specifically, in Step 202, the electronic device 10 receives the patch file PF via the wireless link and stores the patch file PF in the memory 102. In Step 206, the control unit 100 may access the first program code PC_1 and the patch file PF in the memory 102, so as to generate the part BK_k of the second program code PC_2. The part BK_k may be a block of the memory 102 or a block of the first program code PC_1. A size of the part BK_k is preferably a fixed size, e.g., 4 kB, but not limited thereto. In Step 208, the latest generated part BK_k of the second program code PC_2 is temporarily buffered in the volatile memory 104, such that in Step 210, the control unit 100 may access the part BK_k-1 of the second program code PC_2 from the volatile memory 104, so as to overwrite the part BK_k-1 of the second program code PC_2 on top of the first program code PC_1 in the nonvolatile memory 102. Note that, while overwriting the part BK_k, the control unit 100 only refers the part BK_k to a portion of the memory 102 which is not overwritten yet, instead of referring to the entire memory 102.

In short, according to the updating process 20, the newly generated part of the second program code PC_2 is temporarily buffered in the volatile memory 104. In an embodiment, the memory size of the volatile memory 104 is only 2 kilobyte (KB). The newly generated part of the second program code PC_2 would be overwritten into the nonvolatile memory 102 eventually. There is no need to reserve a redundant memory size the nonvolatile memory 102 for storing the updated version of the first program code PC_1. Therefore, the memory size of the nonvolatile memory 102 may be spared, so as to reduce the cost of the electronic device 10.

In addition, the patch file PF may have errors since the patch file PF is transmitted via the wireless link. In order to enhance security and reliability of the wireless transmission of the patch file PF for the electronic device 10 updating the first program code PC_1, an integrity check may be performed on the patch file PF before generating the second program code PC_2. Furthermore, to further improve the security and reliability, the control unit 100 may perform a test run before the control unit 100 generates the second program code PC_2 and overwrites the second program code PC_2 on top of the first program code PC_1. That is, the control unit 100 may generate a third program code PC_3 according to the first program code PC_1 and the patch file PF, where the third program code PC_3 is a test version of the second program code PC_2. The control unit 100 may perform another integrity check on the third program code PC_3 at the same time it is generated, so that it does not need to be actually stored in any memory. If the integrity check on the third program code PC_3 succeeds, the control unit 100 generates the second program code PC_2 for overwriting on top of the first program code PC_1 in the memory 102.

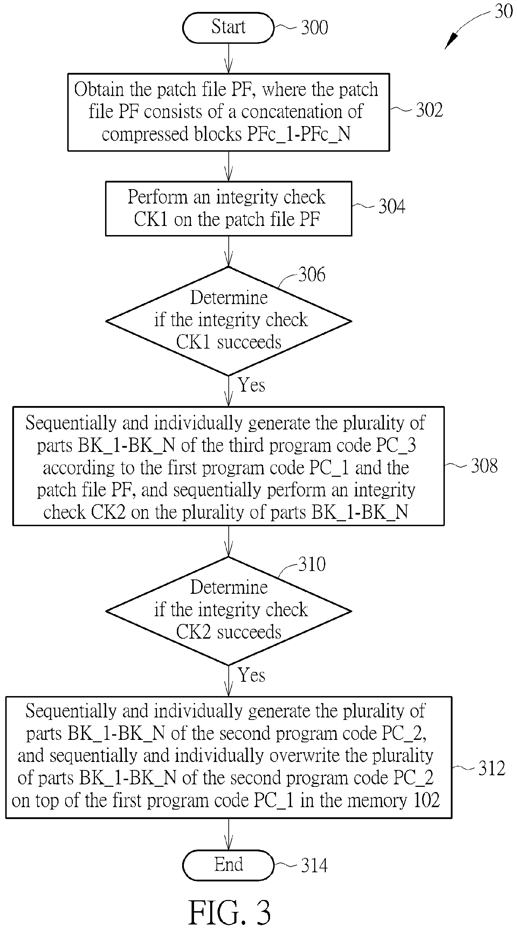

Specifically, please refer to FIG. 3, which is a schematic diagram of an updating process 30 according to an embodiment of the present invention. The updating process 30 is executed by the electronic device 10, and comprises following steps:
- Step 300:: Start.
- Step 302:: Obtain the patch file PF.
- Step 304:: Perform an integrity check CK1 on the patch file PF.
- Step 306:: Determine if the integrity check CK1 succeeds. If yes, go to Step 308.
- Step 308:: Generate the third program code PC_3 according to the first program code PC_1 and the patch file PF, and perform an integrity check CK2 on the third program code PC_3.
- Step 310:: Determine if the integrity check CK2 succeeds. If yes, go to Step 312.
- Step 312:: Sequentially and individually generate the plurality of parts BK_1-BK_N of the second program code PC_2, and sequentially and individually overwrite the plurality of parts BK_1-BK_N of the second program code PC_2 on top of the first program code PC_1 in the memory 102.
- Step 314:: End.

According to the updating process 30, the electronic device 10 performs the integrity check on the patch file PF as well as the test version of the second program code PC_2, i.e., the third program code PC_3. Specifically, in Step 304, the integrity check CK1 may be realized by a kind of cyclic redundancy check (CRC). The CRC is known by one skilled in the art, which is not narrated herein.

If the integrity check CK1 succeeds, in Step 308, the control unit 100 generates the third program code PC_3 according to the first program code PC_1 and the patch file PF and performs the integrity check CK2 on the third program code PC_3, where he integrity check CK2 may also be another kind of CRC. Similarly, the control unit 100 also generates the third program code PC_3 in a piece-by-piece fashion, i.e., the control unit 100 may generate a plurality of parts BT_1-BT_N of the third program code PC_3 sequentially and individually. In other words, the control unit 100 generates a part BT_k of the third program code PC_3 at a time, and stores the part BT_k in the volatile memory 104 after the part BT_k of the third program code PC_3 is generated. The control unit 100 accesses the part BT_k of the third program code PC_3 from the volatile memory 104 to perform the integrity check CK2. After the part BT_k of the third program code PC_3 is accessed for performing the integrity check CK2, the control unit 100 generates a consecutive part BT_k+1 of the third program code PC_3, stores the part BT_k+1 in the volatile memory 104, and accesses the part BT_k+1 from the volatile memory 104 for performing the integrity check CK2. The control unit 100 continues performing the above procedures until the integrity check CK2 on all of the plurality of parts BT_1-BT_N of the third program code PC_3 is completed.

If the integrity check CK2 succeeds, the control unit 100 generates and overwrites the second program code PC_2, the updated version of the first program code PC_1, on top of the first program code PC_1 in the memory 102. That is, in Step 312, the control unit 100 sequentially and individually generates the plurality of parts BK_1-BK_N of the second program code PC_2, and sequentially and individually overwrites the plurality of parts BK_1-BK_N of the second program code PC_2 on the first program code PC_1 in the memory 102. Details of Step 312 are the same as Steps 204-214 of the updating process 20, which are narrated herein for brevity.

As can be seen from the above, the electronic device 10 generates and overwrites the second program code PC_2 on top of the first program code PC_1 in piecewise. The volatile memory 104 is utilized to buffer the newly generated part of the second program code PC_2. Thus, there is no need for twice of memory size to store both the first program code PC_1 and the second program code PC_2.

In summary, the present invention gradually generates and updates the firmware or software of the electronic device, such that the memory size of the nonvolatile memory of the electronic device is reduced.

## Claims

1. A method (20) of updating a program code of an electronic device (10), wherein a first program code is originally stored in a first memory (102) of the electronic device (10), the method **characterized by** comprising:
obtaining a patch file (202);
sequentially and individually generating a plurality of parts of a second program code according to the first program code and the patch file; and
sequentially and individually overwriting the plurality of parts of the second program code on the first program code in the first memory (102).

2. The method (20) of claims 1, **characterized in that** the step of sequentially and individually generating the plurality of parts of the second program code according to the first program code and the patch file comprises:
generating a first part of the second program code according to the first program code and the patch file (204).

3. The method (20) of claim 2, **characterized by** further comprising:
storing the first part of the second program code in a second memory (206);
wherein the second memory (104) is a volatile memory.

4. The method (20) of claim 2 or 3, **characterized in that** the step of sequentially and individually overwriting the plurality of parts of the second program code on the first program code in the first memory comprises:
overwriting the first part of the second program code on the first program code in the first memory (214).

5. The method (20) of claim 1, **characterized in that** the step of sequentially and individually generating the plurality of parts of the second program code according to the first program code and the patch file comprises:
generating a second part of the second program code according to the first program code and the patch file after overwriting the first part of the second program code on the first program code in the first memory (210).

6. The method (20) of any of claims 1-5, **characterized by** further comprising:
performing an integrity check on the patch file after receiving the patch file.

7. The method (20) of any of claims 1-6, **characterized by** further comprising:
generating a third program code according to the first program code and the patch file; and
performing an integrity check on the third program code before overwriting the first part of the second program code on the first program code in the first memory (102).

8. An electronic device (10), **characterized by** comprising:
a first memory (102), storing a first program code;
a wireless module (106), configured to obtain a patch file, and store the patch file in the first memory (102); and
a control unit (100), configured to sequentially and individually generate a plurality of parts of a second program code according to the first program code and the patch file, and sequentially and individually overwrite the plurality of parts of the second program code on the first program code in the first memory (102).

9. The electronic device (10) of any of claim 1 or 8, **characterized in that** each of the first program code and the second program code is a firmware or a software of the electronic device (10).

10. The electronic device (10) of any of claim 1 or 8, **characterized in that** the first memory (102) is a nonvolatile memory.

11. The electronic device (10) of claim 8, **characterized in that** the control unit (100) further performs the following step, for sequentially and individually generating a plurality of parts of a second program code according to the first program code and the patch file:
generating a first part of the second program code according to the first program code and the patch file (204).

12. The electronic device (10) of claim 11, **characterized in that** the control unit (100) further performs the following step:
storing the first part of the second program code in a second memory (206);
wherein the second memory (104) is a volatile memory.

13. The electronic device (10) of claim 11 or 12, **characterized in that** the control unit (100) further performs the following step, for sequentially and individually overwriting the plurality of parts of the second program code on the first program code in the first memory:
overwriting the first part of the second program code on the first program code in the first memory (214).

14. The electronic device (10) of claim 8, **characterized in that** the control unit (100) further performs the following step, for sequentially and individually generating the plurality of parts of the second program code according to the first program code and the patch file:
generating a second part of the second program code according to the first program code and the patch file after overwriting the first part of the second program code on the first program code in the first memory (210).

15. The electronic device (10) of any of claims 8-14, **characterized in that** the control unit (100) further performs the following step:
performing an integrity check on the patch file after receiving the patch file.

16. The electronic device (10) of any of claim 8-15, **characterized in that** the control unit (100) further performs the following step:
generating a third program code according to the first program code and the patch file; and
performing an integrity check on the third program code before overwriting the first part of the second program code on the first program code in the first memory (102).
